# EUROPÄISCHE PATENTSCHRIFT

(11) **EP 1 934 033 B1**
(45) Veröffentlichungstag und Bekanntmachung des Hinweises auf die Patenterteilung: **07.09.2011**
(21) Anmeldenummer: 06725134.8
(22) Anmeldetag: 17.03.2006
(51) Int. Cl.: B29C 45/04, B29C 45/16

(54) **HORIZONTALSPRITZGIESSMASCHINE MIT EINER VERFAHRBAREN DREHEINRICHTUNG FÜR FORMEN VON SPRITZGIESSWERKZEUGEN**
HORIZONTAL INJECTION MOULDING MACHINE COMPRISING A DISPLACEABLE ROTARY DEVICE FOR MOULDS OF INJECTION MOULDING TOOLS
MACHINE DE MOULAGE PAR INJECTION HORIZONTALE COMPORTANT UN DISPOSITIF ROTATIF MOBILE POUR DES MOULES D'OUTILS DE MOULAGE PAR INJECTION

(30) Priorität: 08.04.2005 DE 102005016240
(43) Veröffentlichungstag der Anmeldung: 25.06.2008
(73) Patentinhaber: KraussMaffei Technologies GmbH, 80997 München (DE)
(72) Erfinder: GLASHAGEN, Bernd, 81241 München (DE); HOLZINGER, Reinhard, 81545 München (DE)
(74) Vertreter: Wilhelm, Ludwig
(86) Internationale Anmeldenummer: PCT/EP2006/060836
(87) Internationale Veröffentlichungsnummer: WO 2006/106035

(56) Entgegenhaltungen:
- WO-A-99/28108
- WO-A-2005/077637
- DE-A1- 19 733 667
- US-A- 5 773 049
- PATENT ABSTRACTS OF JAPAN Bd. 018, Nr. 187 (P-1720), 30. März 1994 (1994-03-30) -& JP 05 346356 A (KAZUHIRO OKADA), 27. Dezember 1993 (1993-12-27)
- DASSOW J: "FUER ALLE FAELLE GERUESTET, TECHNOLOGIEFUEHRERSCHAFT DURCH MEHRKOMPONENTENTECHNIK" KUNSTSTOFFE, CARL HANSER VERLAG, MUNCHEN, DE, Bd. 92, September 2002 (2002-09), Seiten 105-109, XP002237523 ISSN: 0023-5563

## Beschreibung

Die Erfindung betrifft eine Horizontalspritzgießmaschine mit einer verfahrbaren Dreheinrichtung für Formhälften von Spritzgießwerkzeugen gemäß dem Oberbegriff von Anspruch 1.

Die WO 01/010624 offenbart eine Zwei-Platten-Horizontalspritzgießmaschine mit einer feststehenden und einer an Säulen gezogenen beweglichen Formaufspannplatte, sowie mit einer zwischen den beiden Formaufspannplatten angeordneten und parallel zur Maschinenlängsachse verschiebbaren und um eine vertikale Achse drehbaren Dreheinrichtung für Spritzgießwerkzeuge. Die Dreheinrichtung umfasst eine mittels erster Antriebsmittel in Maschinenlängsrichtung verschiebbare Grundplatte, auf der ein Drehteller angordnet ist, der mittels zweiter Antriebsmittel um die vertikale Achse drehbar ist. Zum Verschieben der Grundplatte sind üblicherweiser hydraulische Stellantriebe vorgesehen, die einerseits an der Grunplatte und andererseits in dem Maschinenbett und/oder an der feststehenden Formaufspannplatte befestigt sind. Diese Art von Horizontalspritzgießmaschine hat den Vorteil, dass die Dreheinrichtung völlig von den zwischen den Formaufspannplatten verlaufenden Säulen losgelöst sein kann, so dass diese weder mit Gewichts- noch mit Drehmomenten belastet werden. Dies ist insbesondere bei Zwei-Piatten-Horizontalspritzgießmaschine von Bedeutung, da bei diesen die Säulen mitbewegt werden und sich geringfügige Änderungen im Abstand der Säulen zueinander negativ auf eine an diesen Säulen geführte und abgestützte Dreheinrichtung für Spritzgießwerkzeuge auswirken würde. Ausserdem ist das Spritzgießwerkzeug im eingebauten Zustand von beiden Seiten sowie von oben frei zugänglich. Bei der Drehbewegung ergeben sich keine Einschränkungen hinsichtlich der Größe der einbaubaren Spritzgießwerkzeuge ausser durch die Öffnungsweite der Schließeinheit der Spritzgießmaschine. Nachteilig ist jedoch, dass gerade bei großen Horizontalspritzgießmaschinen dieser Art mit einer entsprechend großen Dreheinrichtung und großen, schweren Formhälften beim Anfahren und Abbremsen der Grundplatte infolge von deren Massenträgheit Kippmomente auftreten, die es zu kompensieren gilt. Hierzu wird die Grundplatte auf Linearführungen mit einem geeigneten Querschnitt wie beispielsweise einem Schwalbenschwanzquerschnitt geführt. Mit zunehmender Größe der Horizontalspritzgießmaschine nehmen auch die aufzunehmenden Kippmomente zu; die hierfür erforderlichen Linearführungen mit einem Schwalbenschwanzquerschnitt sind jedoch vergleichsweise teuer und bei ganz großen Horizontalspritzgießmaschinen nicht verfügbar.

Aus dem Dokument JP62060618A ist eine weitere Zwei-Platten-Horizontalspritzgießmaschine mit einer zwischen den beiden Formaufspannplatten angeordneten und parallel zur Maschinenlängsachse verschiebbaren und um eine vertikale Achse drehbaren Dreheinrichtung für Spritzgießwerkzeuge bekannt. Bei dieser Horizontalspritzgießmaschine weist die Dreheinrichtung obere und untere an den Säulen abgestützte und geführte Trägerblöcke auf, zwischen denen ein Formhälftenträger mit einem oberen und einem unteren auf einer Achse liegenden Drehzapfen drehbar zwischen den Trägerblöcken aufgenommen ist. Zum Verfahren des Formhälftenträgers entlang der Maschinenlängsachse sind zwischen der feststehenden Formaufspannplatte einerseits sowie den oberen und unteren Trägerblöcken andererseits hydraulische Stellantriebe vorgesehen. Nachteilig an dieser Horizontalspritzgießmaschine ist, dass die Säulen mit Gewichts- und Drehmomenten belastet werden, insbesondere bei der Verwendung schwerer Formhälftenträger. Da die bewegliche Formaufspannplatte mittels der Säulen verfahren wird, wirkt sich eine Belastung der Säulen mit Gewichts- und Drehmomenten auch ungünstig auf den Verfahrmechanismus und den Bewegungsablauf für die bewegliche Formaufspannplatte aus.

Aus der DE 19733667 A1 ist eine Drei-Platten-Horizontalspritzgießmaschine bekannt, bei der eine bewegliche Formaufspannplatte an zwischen einer feststehenden Formaufspannplatte und einer Abstützplatte sich erstreckenden und in diesen befestigten oberen und unteren Säulen längsverschieblich ist. Zwischen den Formaufspannplatten ist eine parallel zur Maschinenlängsachse verschiebbare Dreheinrichtung für Formhälften von Spritzgießwerkzeugen vorgesehen. Bei dieser Horizontalspritzgießmaschine weist die Dreheinrichtung obere und untere an den Säulen abgestützte und geführte Trägerblöcke auf, zwischen denen ein Formhälftenträger mit einem oberen und einem unteren auf einer Achse liegenden Drehzapfen und geeigneten Lagern drehbar zwischen den Trägerblöcken aufgenommen ist. Zum Verfahren des Formhälftenträgers entlang der Maschinenlängsachse sind zwischen der beweglichen Formaufspannplatte und den oberen und unteren Trägerblöcken hydraulische Stellantriebe vorgesehen. Bei dieser Horizontalspritzgießmaschine treten zwar nicht die oben erwähnten Kippmomente auf. Nachteilig an dieser Drei-Platten-Horizontalspritzgießmaschine ist jedoch, dass die unteren Säulen je nach Schwere der Formhälftenträger mit einem nicht unerheblichem Gewicht belastet werden. Für besonders schwere Formhälftenträger wird daher empfohlen, den unteren Trägerblock zusätzlich mittels Rollen und/oder Kufen auf dem Maschinenbett abzustützen.

Aus der WO 99/28108 ist eine weitere Drei-Platten-Horizontalspritzgießmaschine der zuvor beschriebenen Art bekannt, bei der ausserdem in den beiden Drehzapfen mehrere Kanäle oder Leitungen vorgesehen sind, über die Medien wie Gase, Flüssigkeiten oder elektrischer Strom zu dem Formhälftenträger und weiter zu den Formhälften geführt werden können. Es wird als vorteilhaft angesehen, wenn Fluide wie Gas und/oder Flüssigkeiten durch den unteren und elektrischer Strom durch den oberen Drehzapfen geführt werden, um unerwünschte elektrische Kontakte und Verunreinigungen bei Lecks zu vermeiden.

Ausgehend von dem eingangs genannten Stand der Technik liegt der Erfindung die Aufgabe zugrunde, eine Horizontalspritzgießmaschine anzugeben, die die Vorteile der gattungsgemäßen Horizontalspritzgießmaschine beibehält und bei der auf aufwändige Linearführungen auch bei großen Maschinen verzichtet werden kann.

Die Lösung dieser Aufgabe erfolgt durch eine Horizontalspritzgießmaschine gemäß Anspruch 1. Vorteilhafte Ausgestaltungen und Weiterentwicklungen finden sich in den Unteransprüchen.

Dadurch, dass sich zwischen den oberen Säulen ein an diesen verschiebliches Joch erstreckt, in das ein Drehzapfen des mittleren Formenträgers eingreift, kann der mittlere Formenträger sowohl durch die unten an die Grundplatte angreifenden Antriebsmittel als auch durch zusätzliche auf das Joch wirkenden Antriebsmittel verfahren werden, so dass beim Anfahren und Abbremsen der Dreheinrichtung keine Kippmomente auftreten können. Damit wird das gesamte Gewicht der Dreheinrichtung weiterhin von den Säulen ferngehalten. Die unteren Säulen werden weder mit Gewichts- noch mit Drehmomenten belastet. Die oberen Säulen haben allenfalls das Gewicht des Jochs zu tragen; durch eine Abstützung des Gewichts des Jochs auf dem Formträgerelement mittels geeigneter Gleit- oder Rollenlager können auch die oberen Säulen frei von einer Gewichtsbelastung gehalten werden. Etwaige sich aufgrund der Reibung zwischen dem Drehzapfen und dem Joch ergebende Drehmomente können vernachlässigt werden, insbesonder bei Verwendung geeigneter Lager. Insgesamt können somit alle vier Säulen frei von Gewichts- und Drehmomenten gehalten werden, wie dies auch beim eingangs genannten Stand der Technik der Fall ist.

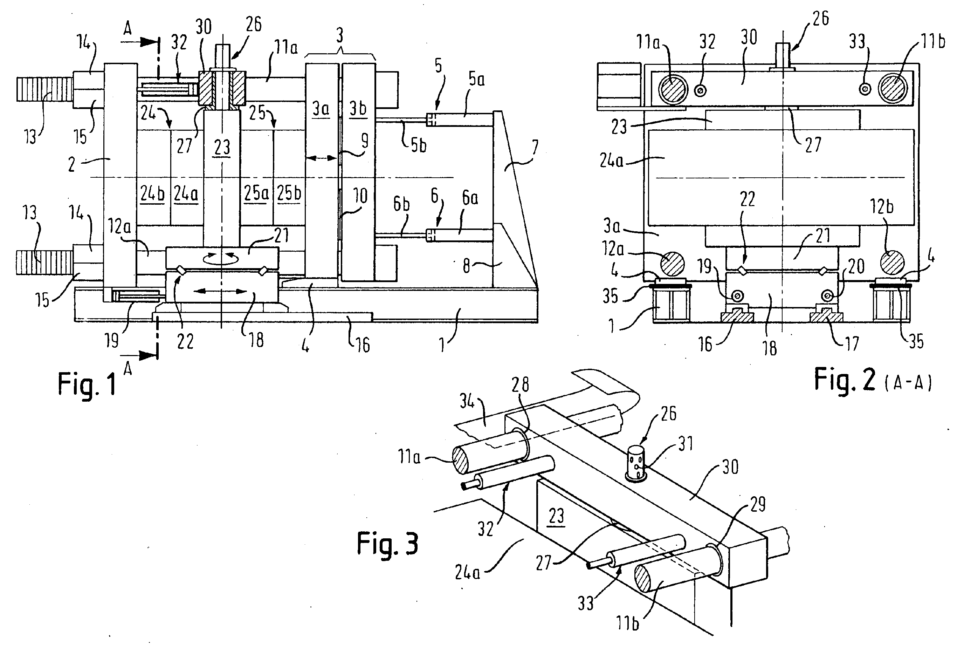

Nachfolgend soll die Erfindung anhand eines Ausführungsbeispiels und unter Bezugnahme auf die Figuren 1 bis 3 näher erläutert werden.

Die Erfindung soll anhand einer Zwei-Platten-Horizontalspritzgießmaschine beschrieben werden. Auf einem Maschinenbett 1 ist eine feststehende Formaufspannplatte 2 befestigt und eine bewegliche Formaufspannplatte 3 auf massiven Gleitschuhen 4 und geeigneten Linearführungen verschieblich abgestützt. Die bewegliche Formaufspannplatte 3 kann mittels diagonal zueinander angeordneter hydraulischer Stellantriebe 5 und 6 verfahren werden. Diese sind einerseits (beispielsweise mit den Zylindern 5a, 6a) an mit dem Maschinienbett verbundenen Stützstreben 7 und 8 und andererseits (beispielsweise mit ihren Kolbenstangen 5b, 6b) an der beweglichen Formaufspannplatte 3 befestigt. Die hydraulischen Stellantriebe 5 und 6 könnten aber auch zwischen der feststehenden und der beweglichen Formaufspannplatte vorgesehen werden. Die Formaufspannplatte 3 selbst besteht aus der eigentlichen Formaufspannplatte 3a und einer Druckplatte 3b, zwischen denen vier Druckkissen zum Aufbringen des Schließdrucks vorgesehen sind, wobei in der Figur nur die hinteren Druckkissen 9 und 10 sichtbar sind. In der beweglichen Formaufspannplatte 3 sind oben und unten jeweils zwei parallel zueinander und in einer Ebende liegende Säulen 11a,b und 12a,b befestigt, von denen in der Figur nur die hinteren Säulen 11a und 12a sichtbar sind. Diese Säulen durchsetzen die feststehende Formaufspannplatte 2 und weisen an ihrem überstehenden Ende Rillen 13 auf, in die Verriegelungsbacken 14 und 15 eingefahren werden können. Auf Linearführungen 16 und 17 ist eine Grundplatte 18 mittels hydraulischer Stellantriebe 19 und 20 parallel zur Maschinenlängsachse verfahrbar. Auf der Grundplatte 18 ist ein Drehteller 21 mittels eines Kreuzrollenlagers 22 abgestützt und um eine vertikale Achse drehbar gelagert. Als Drehantrieb können an sich bekannte und daher hier nicht näher dargestellte und beschriebende Drehantriebe vorgesehen werden. Beispielsweise kann am Aussenumfang des Drehtellers ein Zahnkranz vorgesehen werden, in das ein von einem Elektro- oder Hydromotor antreibbares Zahnrad eingreift.

Oberhalb der Wendeplatte 23 ist ein Joch 30 über eine erste Gleitbuchse 27 auf der Oberseite der Wendeplatte 23 abgestützt und dieser gegenüber drehbar gelagert. Die Säulen 11a und 11 b sind durch weitere Gleitbuchsen 28 und 29 in passende Bohrungen durch das Joch 30 hindurchgeführt. Die erste Gleitbuchse 27 erstreckt sich durch eine passende Ausnehmung in der Mitte des Jochs 30 und dient zur Durchführung eines Drehverteilers bzw. einer Drehdurchführung 26 für die Zufuhr von Medien wie Wasser, Öl, Luft, Strom oder sonstiges zu der Wendeplatte 23 und de Formhälften 24a, 25a. Mittels eines an dem Joch 30 befestigten Kabelschlepp 34 können die hier nicht dargestellten zu den Anschlüssen 31 in dem Drehverteiler führenden Versorgungsleitungen für die Medien die Verfahrbewegung der Dreheinrichtung flexibel mitmachen.

Zwischen dem Joch 30 und der feststehenden Formaufspannplatte 2 sind im Abstand zu dem Drehverteiler 26 zwei hydraulische Stellantriebe 32 und 33 vorgesehen. Im Zusammenwirken mit den unterhalb der Wendeplatte 23 an der Grundplatte 18 angreifenden Stellantrieben 19 und 20 kann die gesamte Dreheinrichtung ohne Gefahr des Kippens beim Anfahren und Abbremsen entlang der Maschinenlängsachse Verfahren werden. Daher müssen die Linearführungen 16 und 17 nicht mit einem speziellen, die Kippmomente aufnehmenden, Querschnitt wie beispielsweise einem Schwalbenschwanzquerschnitt, ausgeführt sein. Stattdessen genügen einfache Linearführungen, die lediglich eine seitliche Führung sicherstellen, wie beispielsweise eine U-förmige Schiene, in die ein passendes Führungsteil an der Unterseite der Grundplatte eingreifen kann oder eine Schiene mit einem auf den Kopf gestellten T-Profil (siehe Figur 2), die mit einer passenden Nut auf der Unterseite der Grundplatte im Eingriff steht.

### Bezugszeichenliste

- 1: Maschinenbett
- 2: Feststehende Formaufspannplatte
- 3: Bewegliche Formaufspannplatte
- 3a: Aufspannplatte der beweglichen Formaufspannplatte
- 3b: Druckplatte der beweglichen Formaufspannplatte
- 4: Gleitschuhe
- 5, 6: Hydraulische Stellantriebe für bewegliche Formaufspannplatte
- 5a, 6a: Hydraulikzylinder
- 5b,6b: Kolbenstangen
- 7, 8: Stützstreben
- 9, 10: Druckkissen
- 11a, 11b: Obere Säulen
- 12a, 12b: Untere Säulen
- 13: Rillen
- 14, 15: Verriegelungsbacken
- 16, 17: Linearführungen für Grundplatte
- 18: Grundplatte
- 19, 20: Hydraulische Stellantriebe für Grundplatte
- 21: Drehteller
- 22: Kreuzrollenlager
- 23: Formhälftenträger bzw. Wendeplatte
- 24: Erstes Spritzgießwerkzeug
- 24a, 24b: Formhälften des ersten Spritzgießwerkzeugs
- 25: Zweites Spritzgießwerkzeug
- 25a, 25b: Formhälften des zweiten Spritzgießwerkzeugs
- 26: Drehverteiler bzw. Drehdurchführung
- 27: Erste Gleitbuchse
- 28, 29: Gleitbuchsen an Säulen
- 30: Joch
- 31: Anschlüsse für Medienversorgung
- 32, 33: Hydraulische Stellantriebe
- 34: Kabelschlepp
- 35: Linearführungen für bewegliche Formaufspannplatte

## Patentansprüche

1. Horizontalspritzgießmaschine mit einer feststehenden (2) und einer beweglichen Formaufspannplatte (3), mit zwischen den beiden Formaufspannplatten (2, 3) verlaufenden Säulen (11a, 11 b, 12a, 12b), mit einer zwischen den Formaufspannplatten (2, 3) angeordneten und mit ersten Antriebsmitteln (19, 20) parallel zur Maschinenlängsachse verschiebbaren Grundplatte (18), auf der ein Drehteller (21) um eine vertikale Achse drehbar gelagert ist, sowie mit einem auf dem Drehteller (21) befestigten Formhälftenträger (23) für Formhälften (24a, 25a) von Spritzgießwerkzeugen (24, 25), wobei die Horizontalspritzgieβma schine ein Maschinenbelt aufweist und wobei ein sich zwischen den oberen Säulen (11a, 11 b) erstreckendes und relativ zu diesen verschiebliches Joch (30) mit einer Ausnehmung vorgesehen ist, dass auf der Oberseite des mittleren Formenträgers (23) ein Drehzapfen vorgesehen ist, der drehbar in der Ausnehmung des Jochs (30) angeordnet ist, und dass zu beiden Seiten des Drehzapfens zwischen dem Joch (30) und einer der beiden Formaufspannplatten (2, 3) weitere Antriebsmittel (32, 33) zum Verschieben des Jochs (30) relativ zu dieser Formaufspannplatte vorgesehen sind.
**dadurch gekennzeichnet, dass**
auf oder in dem Maschinenbett (1) Linearführungen (16, 17) vorgesehen sind, auf denen die Grundplatte (18) verschiebbar abgestützt ist, wobei die Grundplatte (18) mit den unteren Säulen (12a, 12b) nicht in Verbindung steht, so dass das gesamte Gewicht der Dreheinrichtung (21, 23) von den Säulen (12a, 12b) ferngehalten wird.

2. Horizontalspritzgießmaschine nach Anspruch 1,
**dadurch gekennzeichnet, dass**
es sich um eine Zwei-Platten-Horizontalspritzgießmaschine handelt und dass zwischen der feststehenden Formaufspannplatte (2) und dem Joch (30) zwei hydraulische Stellantriebe (32, 33) links und rechts von dem Drehzapfen angeordnet sind.

3. Horizontalspritzgießmaschine nach Anspruch 2,
**dadurch gekennzeichnet, dass**
das Joch (30) auf dem Formhälftenträger (23) abgestützt ist, beispielsweise mittels eines Gleit- oder Rollenlagers (27).

4. Horizontalspritzgießmaschine nach einem der vorangehenden Ansprüche,
**dadurch gekennzeichnet, dass**
der Drehzapfen als Drehverteiler (26) zur Zufuhr von Medien in den Formenträger (23) und/oder in die Formhälften (24a, 24b) ausgebildet ist, der ein mitdrehendes und mit dem Formenträger (23) verbundenes Innenteil sowie ein nicht drehendes und mit dem Joch (30) verbundenes Aussenteil zur Zufuhr von Medien aufweist.

5. Horizontalspritzgießmaschine nach einem der vorangehenden Ansprüche,
**dadurch gekennzeichnet, dass**
auf dem Maschinenbett (1) erste Linearführungen (35) für die bewegliche Formaufspannplatte (3) vorgesehen sind, und dass auf oder in dem Maschinenbett (1) zweite Linearführungen (16, 17) für die Grundplatte (18) vorgesehen sind.

6. Horizontalspritzgießmaschine nach einem der vorangehenden Ansprüche,
**dadurch gekennzeichnet, dass**
erste hydraulische Stellantriebe (32, 33) links und rechts von dem Drehzapfen zwischen dem Joch (30) und der feststehenden Formaufspannplatte (2) einerseits sowie zweite hydraulische Stellantriebe (19, 20) zwischen der Grundplatte (18) und der feststehenden Formaufspannplatte (2) oder einem Halteteil an dem Maschinenbett (1) vorgesehen sind.

7. Horizontalspritzgießmaschine nach einem der vorangehenden Ansprüche,
**dadurch gekennzeichnet, dass**
ein Kabelschlepp (34) an dem Joch (30) befestigt ist, mit dem Versorgungsleitungen flexibel mitnehmbar sind.

## Claims

1. Horizontal injection moulding machine with a fixed (2) and a movable platen (3), with columns (11a, 11b, 12a, 12b) running between the two platens (2, 3), with a base plate (18) arranged between the platens (2, 3) and displaceable parallel to the longitudinal axis of the machine by first drive means (19, 20), on which base plate a turntable (21) is rotatably mounted about a vertical axis, and with a mould half carrier (23), fastened on the turntable (21), for mould halves (24a, 25a) of injection moulding tools (24, 25), wherein the horizontal injection moulding machine has a machine bed and wherein a yoke (30), extending between the upper columns (11a, 11b) and displaceable relative thereto, is provided with a recess, on the upper side of the central mould carrier (23) a pivot pin is provided, which is arranged rotatably in the recess of the yoke (30), and on both sides of the pivot pin between the yoke (30) and one of the two platens (2, 3) further drive means (32, 33) are provided for displacing the yoke (30) relative to this platen,
**characterized in that**
on or in the machine bed (1) linear guides (16, 17) are provided, on which the base plate (18) is displaceably supported, wherein the base plate (18) is not connected with the lower columns (12a, 12b), so that the entire weight of the rotary arrangement (21, 23) is kept remote from the columns (12a, 12b).

2. Horizontal injection moulding machine according to Claim 1,
**characterized in that**
it is a two-platen horizontal injection moulding machine and that between the fixed platen (2) and the yoke (30) two hydraulic actuators (32, 33) are arranged to the left and to the right of the pivot pin.

3. Horizontal injection moulding machine according to Claim 2,
**characterized in that**
the yoke (30) is supported on the mould half carrier (23), for example by means of a sliding-or roller bearing (27).

4. Horizontal injection moulding machine according to one of the preceding claims,
**characterized in that**
the pivot pin is constructed as a rotary distributor (26) for the supply of media into the mould carrier (23) and/or into the mould halves (24a, 24b), which has a co-rotating inner part connected with the mould carrier (23) and a nonrotating outer part connecting with the yoke (30) for the supply of media.

5. Horizontal injection moulding machine according to one of the preceding claims,
**characterized in that**
first linear guides (35) are provided on the machine bed (1) for the movable platen (3), and second linear guides (16, 17) for the base plate (18) are provided on or in the machine bed (1).

6. Horizontal injection moulding machine according to one of the preceding claims,
**characterized in that**
on the one hand, first hydraulic actuators (32, 33) are provided between the yoke (30) and the fixed platen (2) to the left and to the right of the pivot pin, and second hydraulic actuators (19, 20) are provided between the base plate (18) and the fixed platen (2) or a retention member on the machine bed (1).

7. Horizontal injection moulding machine according to one of the preceding claims,
**characterized in that**
a cable carrier (34) is fastened to the yoke (30), by which supply lines can be flexibly carried.

## Revendications

1. Machine de moulage par injection horizontale comportant des plateaux de serrage de moule fixe (2) et mobile (3), avec des colonnes (11a, 11b, 12a, 12b) s'étendant entre les deux plateaux de serrage de moule (2,3), avec un plateau de base (18) disposé entre les plateaux de serrage de moule (2,3), mobile parallèlement à l'axe longitudinal de la machine avec des premiers moyens d'entraînement (19, 20), sur lequel un disque rotatif (21) est disposé de manière à pouvoir tourner sur un axe vertical, ainsi qu'avec un support de moitiés de moule (23) pour des moitiés de moule (24a, 25a) d'outils de moulage par injection (24, 25) fixé sur le disque rotatif (21), sachant que la machine de moulage par injection horizontale présente un banc de machine et sachant qu'une travée (30) s'étendant entre les colonnes supérieures (11a, 11b) et mobile par rapport à celles-ci est munie d'un évidement, en ce que sur la face supérieure du support de moule central (23), un pivot est prévu qui est disposé de manière à pouvoir tourner dans l'évidement de la travée (30) et en ce que des moyens d'entraînement supplémentaires (32, 33) sont prévus sur les deux côtés du pivot entre la travée (30) et un des deux plateaux de serrage de moule (2,3), pour déplacer la travée (30) par rapport à ce plateau de serrage de moule,
**caractérisée en ce que** sur ou dans le banc de machine (1), des guides linéaires (16, 17) sont prévus, sur lesquels le plateau de base (18) est disposé de manière mobile, sachant que le plateau de base (18) n'est pas en liaison avec les colonnes inférieures (12a, 12b), de façon à ce que tout le poids du dispositif rotatif (21, 23) soit maintenu à distance des colonnes (12a, 12b).

2. Machine de moulage par injection horizontale selon la revendication 1, **caractérisée en ce qu'**il s'agit d'une machine de moulage par injection horizontale à deux plateaux et qu'entre le plateau de serrage de moule fixe (2) et la travée (30), deux servomoteurs (32, 33) sont disposés à gauche et à droite du pivot.

3. Machine de moulage par injection horizontale selon la revendication 2, **caractérisée en ce que** la travée (30) est appuyée sur le support de moitiés de moule (23), par exemple au moyen d'un palier lisse ou à rouleaux (27).

4. Machine de moulage par injection horizontale selon l'une des revendications précédentes, **caractérisée en ce que** le pivot est formé comme un distributeur rotatif (26) pour amener du fluide dans les supports de moule (23) et/ou dans les moitiés de moule (24a, 24b), lequel présente une partie intérieure conjointe en rotation et reliée au support de moule (23), ainsi qu'une partie extérieure non rotative et reliée à la travée (30) pour amener des fluides.

5. Machine de moulage par injection horizontale selon l'une des revendications précédentes, **caractérisée en ce que** des premiers guides linéaires (35) sont prévus sur le banc de machine (1) pour le plateau de serrage de moule mobile (3) et **en ce que** sur ou dans le banc de machine (1), des deuxièmes guides linéaires (16, 17) sont prévus pour le plateau de base (18).

6. Machine de moulage par injection horizontale selon l'une des revendications précédentes, **caractérisée en ce que** des premiers servomoteurs hydrauliques (33, 32) sont disposés à gauche et à droite du pivot entre la travée (30) et le plateau de serrage de moule fixe (2) d'une part, et que des deuxièmes servomoteurs hydrauliques (19, 20) sont disposés entre le plateau de base (18) et le plateau de serrage de moule fixe (2) ou une pièce de retenue sur le banc de machine (1).

7. Machine de moulage par injection horizontale selon l'une des revendications précédentes, **caractérisée en ce qu'**un treuil à câbles (34) est fixé sur la travée (30), avec lequel des conduites d'alimentation peuvent être entraînées conjointement de manière flexible.
